# FASCICULE DE BREVET EUROPEEN

(11) **EP 2 786 000 B1**
(45) Date de publication et mention de la délivrance du brevet: **06.04.2016**
(21) Numéro de dépôt: 12795563.1
(22) Date de dépôt: 16.11.2012
(51) Int. Cl.: F02D 9/10, F02M 26/53, F02M 26/48, F02M 26/65, F02M 26/11, F16K 1/48, F16K 47/00, F16K 37/00

(54) **PROCEDE DE MONTAGE D'UNE VANNE DE CONTROLE D'AIR**
VERFAHREN ZUR MONTAGE EINES LUFTREGELVENTILS
METHOD FOR MOUNTING AN AIR CONTROL VALVE

(30) Priorité: 28.11.2011 FR 1160861
(43) Date de publication de la demande: 08.10.2014
(73) Titulaire: Valeo Systèmes de Contrôle Moteur, 95800 Cergy (FR)
(72) Inventeur: FELIX, Emmanuel, F-95280 Jouy Le Moutier (FR); BLANCHARD, Jérôme, F-28700 Bleury (FR); SOTO, Adrien, F-53000 Laval (FR)
(74) Mandataire: Garcia, Christine
(86) Numéro de dépôt international: PCT/FR2012/052646
(87) Numéro de publication internationale: WO 2013/079847

(56) Documents cités:
- EP-A2- 1 028 239
- EP-A2- 1 296 042
- US-A1- 2006 255 308

## Description

L'invention se rapporte à un procédé de montage d'une vanne de contrôle permettant de réguler le passage de gaz dans un circuit de gaz d'un véhicule automobile.

Un véhicule automobile doté d'un moteur thermique comprend généralement un circuit de refroidissement d'air, ainsi qu'au moins une boucle EGR (Exhaust Gas Recirculation en langue anglaise) permettant de ponctionner des gaz d'échappement et de les réacheminer en amont du moteur afin qu'ils se mélangent à l'air incident. Ces différents circuits de gaz sont régulés au moyen de vannes pouvant adopter différentes configurations, allant d'une position de fermeture complète à une position d'ouverture maximale, en passant par des positions d'ouverture intermédiaire. L'invention porte sur un procédé optimisé de montage d'une vanne de régulation de gaz, ainsi que sur la vanne issue d'un tel procédé. Un exemple d'une telle vanne est décrite dans le document EP-1028 239.

Il est à noter que le terme « vanne » est général, et désigne tout type de dispositif de régulation de gaz au sein d'un circuit de gaz d'un véhicule automobile. Une telle vanne peut par exemple être un doseur d'air d'admission ou une vanne de régulation d'une boucle EGR.

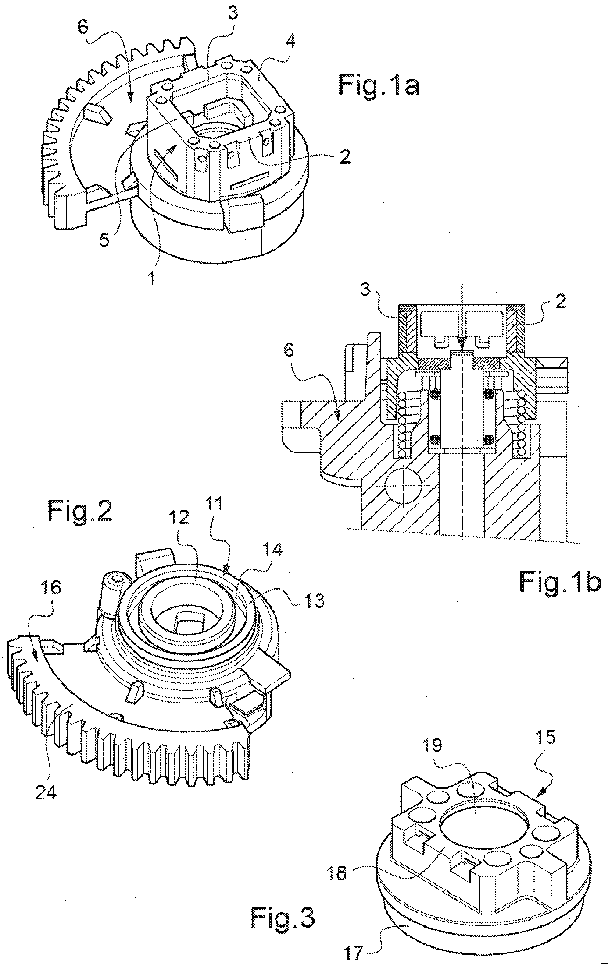

En se référant aux figures 1a et 1b, une vanne de l'état de la technique destinée à réguler un flux de gaz fonctionne avec une structure 1 magnétique et un capteur à effet Hall. Cette structure magnétique comporte deux aimants 2,3 et deux pôles 4,5 disposés selon une configuration en carré, ladite structure 1 étant surmoulée sur un secteur denté 6 faisant un quart de cercle. Cette disposition pour laquelle la structure 1 émerge du secteur denté 6 occupe un volume important qui n'est pas compatible avec les espaces restreints, laissés disponibles sous le capot d'un véhicule, autour du moteur.

Un procédé de montage selon l'invention permet d'élaborer des vannes de contrôle de gaz, ayant un encombrement réduit en favorisant un positionnement des aimants à plat, beaucoup moins consommateur de place qu'une configuration saillante en carré. Cette nouvelle disposition des aimants est rendue possible grâce à une technique de liaison originale, permettant de solidariser deux éléments dont les géométries particulières rendent difficile cette solidarisation au moyen de méthodes usuelles.

L'invention a pour objet un procédé de montage d'une vanne de régulation destinée à contrôler le débit de gaz dans un circuit d'un véhicule automobile doté d'un moteur thermique, ladite vanne comprenant une structure magnétique, un axe de rotation et un secteur denté.

Le procédé selon l'invention comprend les étapes suivantes :
- Assemblage du secteur denté sur l'axe de rotation,
- Solidarisation par soudage de la structure magnétique sur le secteur denté figé sur l'axe de rotation.

Ainsi, la position du secteur denté est d'abord figée sur l'axe de rotation, puis la structure magnétique est amenée au contact dudit secteur afin d'être solidarisée à celui-ci au moyen d'une soudure. Ces deux étapes sont simples à réaliser et sont donc rapides à mettre en oeuvre, la technique de soudage étant de plus sûre et fiable pour relier de façon rigide deux éléments entre eux. De plus, cette technique de liaison par soudure ne nécessite pas la présence de pièces d'interface ou de moyens de fixation mécaniques tels que des vis et permet de lier deux éléments entre eux avec une économie de place.

Avantageusement, le secteur denté comporte une gorge annulaire et la structure magnétique comprend un rebord saillant circulaire, l'étape de solidarisation étant effectuée par un soudage rotatif réalisé entre ledit rebord et le fond de ladite gorge. Autrement dit, l'insertion du rebord dans la gorge permet un pré-positionnement de la structure magnétique sur le secteur denté avant que ladite structure ne soit figée définitivement dans ledit secteur par soudage. Un tel montage, impliquant une étape implicite de guidage, va contribuer à un agencement satisfaisant des pièces entre elles, sans risque de mauvais positionnement avant le soudage. De plus, la pénétration du rebord dans la gorge va abaisser la position de la structure magnétique sur le secteur denté d'une hauteur sensiblement équivalente à la profondeur de ladite gorge, limitant ainsi l'encombrement de ladite structure sur ledit secteur denté. Un soudage rotatif est particulièrement adapté à l'interface de contact annulaire entre la structure magnétique et le secteur denté.

De façon préférentielle, le procédé comporte une étape d'installation d'une sonde fixe à effet Hall dans la vanne, de manière à ce que la structure magnétique se retrouve entre le secteur denté et ladite sonde. Ladite sonde est figée dans une position donnée au sein de la vanne, et permet de mesurer le champ magnétique délivré par la structure magnétique amenée à pivoter et donc à faire varier l'intensité dudit champ dans une direction donnée.

De façon avantageuse, le procédé met en oeuvre une étape préalable de surmoulage de la structure magnétique. Avant d'être soudée au secteur denté, la structure magnétique aura été fabriquée en une seule pièce par surmoulage. Une telle étape de fabrication d'une pièce en plastique est facile et rapide à exécuter, contribuant à simplifier davantage encore le procédé de montage selon l'invention.

L'invention a également pour objet une vanne de régulation destinée à contrôler le débit de gaz dans un circuit d'un véhicule automobile doté d'un moteur thermique. La principale caractéristique de ladite vanne est qu'elle est fabriquée à partir d'un procédé de montage selon l'invention. Une telle vanne peut être rencontrée sur tout type de circuit de gaz gravitant autour du moteur, ledit circuit pouvant être par exemple un circuit de refroidissement dudit moteur ou une boucle EGR. Une vanne fabriquée au moyen d'un procédé de montage selon l'invention possède un encombrement réduit en raison d'un agencement compact des pièces impliquées, rendu possible par la technique de soudage rotatif.

Avantageusement, la structure magnétique comporte une embase cylindrique creuse, destinée à venir se loger dans une gorge annulaire du secteur denté, ladite embase circulaire étant surmontée d'un cadre de forme carré dans lequel est placé au moins un aimant. Le cadre définit un logement dans lequel est placé chaque aimant, ledit cadre servant également à protéger chacun desdits aimants de tout choc extérieur. Il est supposé que le diamètre extérieur de l'embase est légèrement inférieur à celui de la paroi circulaire extérieure de la gorge. Chaque aimant est placé dans le cadre sans introduire de jeu, de manière à ne pas vibrer lorsque le véhicule est en phase de roulage.

De façon préférentielle, l'embase et le cadre sont réalisés en une seule pièce par surmoulage. Selon un mode de réalisation préféré d'une vanne selon l'invention, l'embase et le cadre sont réalisés en matière plastique.

De façon avantageuse, chaque aimant a une forme tronconique. Cette forme d'aimant est facile à usiner et s'adapte bien à l'environnement de la vanne.

Selon un premier mode de réalisation préféré d'une vanne selon l'invention, ladite vanne constitue un doseur d'admission d'air. Généralement, un doseur d'air est placé dans un circuit de refroidissement en air d'un moteur, en amont dudit moteur, et permet de réguler le flux d'air incident arrivant dans le collecteur d'admission.

Selon un deuxième mode de réalisation préféré d'une vanne selon l'invention, ladite vanne constitue une vanne contrôlant le débit de gaz d'une boucle EGR. Un circuit d'alimentation en air permettant de refroidir un moteur comporte généralement au moins une boucle EGR qui permet de ponctionner des gaz d'échappement pour les mélanger à de l'air incident circulant en amont dudit moteur.

Les procédés de montage selon l'invention permettent d'élaborer des vannes de régulation de flux de gaz ayant un encombrement réduit et qui sont donc particulièrement adaptées à un circuit d'alimentation en air destiné à refroidir un moteur de véhicule automobile. Ils ont de plus l'avantage de mettre en oeuvre des étapes faciles et rapides à exécuter, comme par exemple la fabrication de pièces par surmoulage et l'opération de soudage rotatif.

On donne ci-après une description détaillée d'un mode de réalisation préféré d'une vanne de régulation du débit de gaz selon l'invention, en se référant aux figures 1 à 5.
- La figure 1a est une vue en perspective d'un assemblage d'un secteur denté et d'une structure magnétique d'une vanne de l'état de la technique.
- La figure 1b est une vue en coupe axiale longitudinale de l'assemblage de la figure 1a,
- La figure 2 est une vue en perspective d'un secteur denté d'une vanne selon l'invention,
- La figure 3 est une vue en perspective d'une structure magnétique d'une vanne selon l'invention,
- La figure 4a est une vue en en coupe d'un axe de rotation, d'un secteur denté et d'une structure magnétique d'une vanne selon l'invention, avant montage.
- La figure 4b est une vue en coupe d'un axe de rotation, d'un secteur denté et d'une structure magnétique d'une vanne selon l'invention, après montage.
- La figure 5 est une vue en coupe d'un secteur denté, d'une structure magnétique et d'une sonde d'une vanne selon l'invention.

Les figures 1a et 1b ont déjà été décrites.

En se référant aux figures 1 et 2, une vanne selon l'invention est constituée par un doseur d'air 10 d'admission placé dans la partie amont d'un circuit de refroidissement d'air d'un moteur de véhicule automobile. Ce doseur 10 permet de réguler le flux d'air incident qui va venir refroidir le moteur, en adoptant plusieurs configurations. En effet, il peut être commandé pour interrompre ledit flux lorsque le moteur est suffisamment refroidi. Il peut également autoriser un flux d'air maximal, lorsque le véhicule tourne à plein régime et que le moteur risque d'être en surchauffe. Enfin, il peut être réglé dans une position intermédiaire afin de permettre le passage d'un flux d'air modéré.

En se référant à la figure 2, le doseur 10 comporte schématiquement un secteur denté 16, comprenant un segment denté 24 en arc de cercle, qui couvre sensiblement un quart de cercle, et une protubérance 11 émergeant au-delà dudit secteur denté 16, et composée de deux pièces cylindriques 12,13 creuses, disposées de façon concentrique. Le secteur denté 16 et la protubérance 11 comprenant les deux pièces cylindriques 12,13 sont réalisés en une seule pièce par surmoulage. Les deux pièces cylindriques 12,13 ménagent entre elles un espace libre 14 définissant une gorge annulaire.

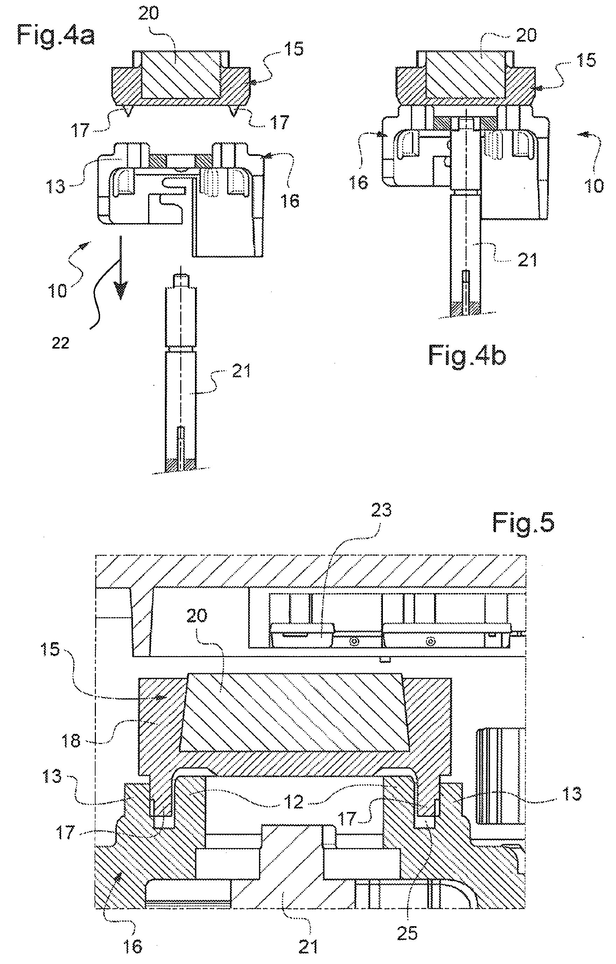

En se référant à la figure 3, le doseur 10 comporte une structure magnétique 15 dotée d'une embase 17 cylindrique creuse et surmontée d'un cadre 18 de forme sensiblement rectangulaire. Ledit cadre 18 délimite un espace intérieur 19 ayant une géométrie tronconique et destiné à loger un aimant tronconique 20, comme le montre la figure 5. Les dimensions dudit aimant 20 sont légèrement inférieures à celles de son espace de logement 19, si bien qu'il est inséré à l'intérieur de celui-ci sans laisser subsister de jeu. De cette manière, l'aimant 20 demeure figé à l'intérieur du cadre 18 et ne peut donc pas vibrer à l'intérieur de celui-ci. L'embase 17 et le cadre 18 sont préférentiellement réalisés en une seule pièce par surmoulage.

En se référant aux figures 4a et 4b, le doseur 10 d'air d'admission possède également un axe de rotation 21 dont est solidaire un volet, non visible sur les figures, ledit volet se retrouvant dans le conduit d'alimentation en air du moteur afin de réguler le flux d'air incident. En effet, le secteur denté 16 du doseur 10 est amené à pivoter sous l'effet d'un secteur denté complémentaire situé à son contact et relié à une unité de commande, cette rotation entrainant celle du volet pour réguler le flux d'air dans le conduit. Un procédé de montage selon l'invention, permettant la fabrication d'un doseur 10 comprend les étapes suivantes :
- Le secteur denté 16 est enfilé autour de l'axe de rotation 21, comme l'indique la flèche 22, puis sa position définitive autour dudit axe 21 est figée de façon rigide,
- La structure magnétique 15 est ensuite amenée au contact du secteur denté 16 placé autour de l'axe 21, de manière à ce que l'embase 17 pénètre dans la gorge annulaire 14,
- En se référant aux figures 4b et 5, la structure magnétique 15 est solidarisée au secteur denté 16 par une soudure rotative réalisée entre l'embase 17 et le fond de ladite gorge 14, au moyen d'un brin de soudage 25 intercalé entre l'extrémité libre de ladite embase 17 et le fond de ladite gorge 14.

En se référant à la figure 5, une sonde à effet Hall 23 est placée de façon fixe dans le doseur 10 à proximité de l'aimant 20 logé dans le cadre 18 de la structure magnétique 15, ledit aimant 20 se retrouvant positionné entre ladite sonde 23 fixe et le secteur denté 16 rotatif. La sonde à effet Hall, qui permet de mesurer le champ magnétique produit par la structure magnétique 15, est un indicateur du degré d'ouverture du volet du doseur 10 dans le circuit d'air.

Le fonctionnement du doseur 10 est le suivant. Un signal est envoyé à une source énergétique pilotant la rotation du secteur denté complémentaire, qui amorce alors un pivotement contrôlé, entraînant par engrènement le pivotement du secteur denté 26 du doseur 10. La rotation dudit secteur denté 26 engendre simultanément celle de la structure magnétique 15 qui lui est rattachée, ainsi que celle du volet. La sonde 23 à effet Hall, qui demeure fixe dans le doseur 10, mesure ainsi le champ magnétique produit par la structure magnétique 15 après son pivotement. Grâce à cette sonde 23, la position du volet dans le circuit de refroidissement est alors connue.

## Revendications

1. Procédé de montage d'une vanne (10) de régulation destinée à contrôler le débit de gaz dans un circuit d'un véhicule automobile doté d'un moteur thermique, ladite vanne (10) comprenant un axe de rotation (21), une structure magnétique (15) comprenant un rebord saillant circulaire (17), et un secteur denté (16) comportant une gorge annulaire (14), caractérisé en qu'il comprend les étapes suivantes :
- Assemblage du secteur denté (16) sur l'axe de rotation (21),
- Solidarisation par soudage de la structure magnétique (15) sur le secteur denté (16) figé sur l'axe de rotation (21), ledit soudage étant un soudage rotatif réalisé entre ledit rebord (17) et le fond de ladite gorge (14)

2. Procédé de montage selon la revendication 1, **caractérisé en ce qu'**il comporte une étape d'installation d'une sonde fixe (23) à effet Hall dans la vanne (10), de manière à ce que la structure magnétique (15) se retrouve entre le secteur denté (16) et ladite sonde (23).

3. Procédé de montage selon l'une quelconque des revendications 1 ou 2, **caractérisé en ce qu'**il met en oeuvre une étape préalable de surmoulage de la structure magnétique (15).

4. Vanne de régulation (10) destinée à contrôler le débit de gaz dans un circuit d'un véhicule automobile doté d'un moteur thermique, **caractérisée en ce qu'**elle est montée à partir d'un procédé selon l'une quelconque des revendications 1 à 3.

5. Vanne de régulation (10) selon la revendication 4, **caractérisé en ce que** la structure magnétique (15) comporte une embase (17) cylindrique creuse, destinée à venir se loger dans une gorge (14) annulaire du secteur denté (16), et **en ce que** ladite embase circulaire (17) est surmontée d'un cadre (18) de forme carré dans lequel est placé au moins un aimant (20).

6. Vanne de régulation (10) selon la revendication 5, **caractérisée en ce que** l'embase (17) et le cadre (18) sont réalisés en une seule pièce par surmoulage.

7. Vanne de régulation (10) selon l'une quelconque des revendications 5 ou 6, **caractérisée en ce que** chaque aimant (20) a une forme tronconique.

8. Vanne de régulation (10) selon l'une quelconque des revendications 4 à 7, **caractérisée en ce qu'**elle constitue un doseur d'air d'admission.

9. Vanne de régulation (10) selon l'une quelconque des revendications 4 à 7, **caractérisée en ce qu'**elle constitue une vanne contrôlant le débit de gaz d'une boucle EGR.

## Patentansprüche

1. Verfahren zum Montieren eines Regulierungsventils (10), das dazu bestimmt ist, den Gasdurchfluss in einer Leitung eines Kraftfahrzeugs, das mit einer Brennkraftmaschine versehen ist, zu steuern, wobei das Ventil (10) eine Drehwelle (21), eine magnetische Struktur (15) mit einem kreisförmigen vorstehenden Rand (17) und einen Zahnsektor (16) mit einer ringförmigen Kehle (14) umfasst, **dadurch gekennzeichnet, dass** es die folgenden Schritte umfasst:
- Anbringen des Zahnsektors (16) an der Drehwelle (21),
- Befestigen durch Schweißen der magnetischen Struktur (15) an dem Zahnsektor (16), der an der Drehwelle (21) fest angebracht ist, wobei das Schweißen ein Umlaufschweißen ist, das zwischen dem Rand (17) und dem Boden der Kehle (14) erfolgt.

2. Montageverfahren nach Anspruch 1, **dadurch gekennzeichnet, dass** es einen Schritt des Installierens einer festen Hall-Effekt-Sonde (23) in dem Ventil (10) umfasst, derart, dass sich die magnetische Struktur (15) zwischen dem Zahnsektor (16) und der Sonde (23) befindet.

3. Montageverfahren nach einem der Ansprüche 1 oder 2, **dadurch gekennzeichnet, dass** es einen vorherigen Schritt des Überformens der magnetischen Struktur (15) ausführt.

4. Regulierungsventil (10), das dazu bestimmt ist, den Gasdurchfluss in einer Leitung eines Kraftfahrzeugs, das mit einer Brennkraftmaschine versehen ist, zu steuern, **dadurch gekennzeichnet, dass** es mittels eines Verfahrens nach einem der Ansprüche 1 bis 3 montiert wird.

5. Regulierungsventil (10) nach Anspruch 4, **dadurch gekennzeichnet, dass** die magnetische Struktur (15) eine hohlzylindrische Basis (17) umfasst, die dazu bestimmt ist, in einer ringförmigen Kehle (14) des Zahnsektors (16) aufgenommen zu werden, und dass die kreisförmige Basis (17) auf einem Rahmen (18) mit quadratischer Form, in dem wenigstens ein Magnet (20) angeordnet ist, montiert ist.

6. Regulierungsventil (10) nach Anspruch 5, **dadurch gekennzeichnet, dass** die Basis (17) und der Rahmen (18) einteilig durch Überformen verwirklicht sind.

7. Regulierungsventil (10) nach einem der Ansprüche 5 oder 6, **dadurch gekennzeichnet, dass** jeder Magnet (20) eine Kegelstumpfform hat.

8. Regulierungsventil (10) nach einem der Ansprüche 4 bis 7, **dadurch gekennzeichnet, dass** es eine Einlassluft-Dosiereinrichtung bildet.

9. Regulierungsventil (10) nach einem der Ansprüche 4 bis 7, **dadurch gekennzeichnet, dass** es ein Ventil, das den Gasdurchfluss einer AGR-Schleife steuert, bildet.

## Claims

1. Method for assembling a regulating valve (10) designed to control the flow of gas in a circuit of an automotive vehicle provided with a heat engine, said valve (10) comprising a pivot pin (21), a magnetic structure (15) comprising a circular protruding edge (17), and a toothed sector (16) comprising an annular groove (14), **characterized in that** it comprises the following steps:
- assembling the toothed sector (16) on the pivot pin (21),
- fixing by welding the magnetic structure (15) to the toothed sector (16) which is fixed to the pivot pin (21), said welding being rotational welding carried out between said edge (17) and the bottom of said groove (14).

2. Method for assembling according to Claim 1, **characterized in that** it comprises a step of installing a fixed Hall effect sensor (23) in the valve (10), so that the magnetic structure (15) is located between the toothed sector (16) and said sensor (23).

3. Method for assembling according to either one of Claims 1 and 2 **characterized in that** it uses a prior step of overmolding the magnetic structure (15).

4. Regulating valve (10) designed to control the flow of gas in a circuit of an automotive vehicle provided with a heat engine, **characterized in that** it is assembled using a method according to any one of Claims 1 to 3.

5. Regulating valve (10) according to Claim 4, **characterized in that** the magnetic structure (15) comprises a hollow cylindrical base (17) designed to be housed in an annular groove (14) of the toothed sector (16) and **in that** said circular base (17) is surmounted by a square-shape frame (18) in which at least one magnet (20) is placed.

6. Regulating valve (10) according to Claim 5, **characterized in that** the base (17) and the frame (18) are produced in a single piece by overmolding.

7. Regulating valve (10) according to any one of Claims 5 or 6, **characterized in that** each magnet (20) has a frustoconical shape.

8. Regulating valve (10) according to any one of Claims 4 to 7, **characterized in that** it constitutes an air intake metering device.

9. Regulating valve (10) according to any one of Claims 4 to 7, **characterized in that** it constitutes a valve controlling the flow of gas of an EGR loop.
